# EUROPEAN PATENT APPLICATION

(11) **EP 1 431 674 A1**
(43) Date of publication of application: **23.06.2004**
(21) Application number: 03028293.3
(22) Date of filing: 10.12.2003
(51) Int. Cl.: F24D 19/00, C02F 5/02

(54) **Water heater comprising water softening means**

(30) Priority: 10.12.2002 JP 2002358033
(71) Applicant: MATSUSHITA ELECTRIC INDUSTRIAL CO., LTD., Kadoma-shi, Osaka 571-8501 (JP)
(72) Inventor: Kawabe, Yoshikazu, Sakata-gun Shiga 521-0014 (JP); Nakatani, Kazuo, Neyagawa-shi Osaka 572-0045 (JP); Inoue, Yuji, Otsu-shi Shiga 520-2101 (JP); Okaza, Noriho, Kusatsu-shi Shiga 525-0058 (JP); Sato, Shigehiro, Kusatsu-shi Shiga 525-0045 (JP)
(74) Representative: Körfer, Thomas, Dipl.-Phys.

(57) **Abstract**

A scale removing operation of the heat exchange means or a regenerating operation of ion removing means is carried out using electrolytic water, thereby reducing the water processing amount. The present invention provides a water heater capable of preventing deterioration of performance caused by adhesion of scale, capable of preventing a trouble caused by clogging, and capable of increasing the lifetime. The water heater comprising a heat source, heat exchange means for heating supplied water, and electrolytic water generating means, wherein a removing operation of scale having salt as main ingredient deposited in a water pipe of the heat exchange means is carried out using produced water of the electrolytic water generating means.

## Description

### Technical Field

The present invention relates to a water heater which can automatically eliminate scale such as calcium carbonate generated in a water pipe of a heat exchanger, or which can automatically regenerate an ion-eliminating apparatus, thereby preventing deterioration of performance of the water heater which may be caused by a adhesion of scale and preventing a trouble caused by clogging.

### Background Technique

Conventionally, it is known that salt such as calcium carbonate is deposited as scale in a water pipe of a water heater. This is because that saturation solubility of the calcium carbonate is lowered by increase of the water temperature and the calcium carbonate can not sufficiently be dissolved in water and deposited. The scale is prone to be generated especially in the vicinity of an exit of a heat exchanger where the temperature is increased, and the actual cross sectional area of a water passage of the exit of the heat exchanger is reduced with time by the adhered scale. This deteriorates the heat-exchange efficiency and causes a trouble such as clogging at the worst in some cases.

According to conventional methods for solving such problems, a cross sectional area of the water passage of the exit of the heat exchanger is increased so that the water pipe is not clogged even if scale is adhered, or the temperature of hot water is reduced to suppress the reduction of the solubility as small as possible. In addition to a method in which maintenance such as washing or cleaning using chemicals is carried out periodically, there is a more positive method in which water is subjected to electrical processing to suppress the adhesion of the scale while utilizing characteristics of calcium carbonate that the solubility of the calcium carbonate is high in acid solution having low pH value and the calcium carbonate is less prone to dissolve in alkali solution having high pH value.

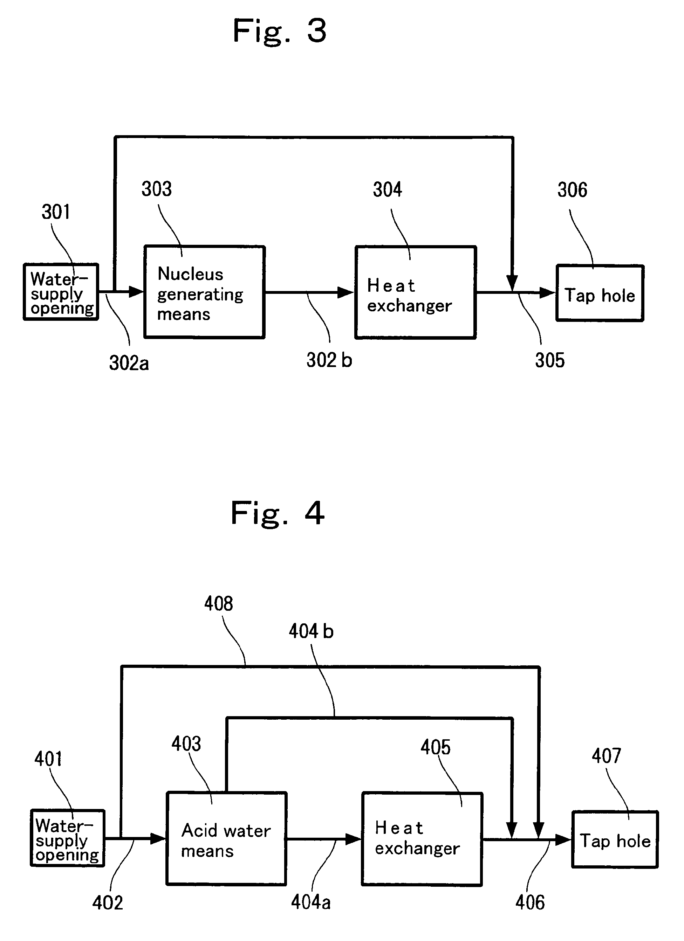

Fig. 3 shows an example of an invention utilizing alkali water. This example comprises a water-supply opening 301 to be connected to a water supply, a water supply-side pipe 302a, nucleus generating means 303 for generating nucleus of calcium compound, a water supply-side pipe 302b, a heat exchanger 304 for heating water, a tapping-side pipe 305 and a tap hole 306 to be connected to the tapping means.

The nucleus generating means 303 includes a plurality of opposed electrodes, feeble current is allowed to flow, thereby increasing a pH value of water in the vicinity of a cathode to alkalify the water, and the solubility of the calcium carbonate is lowered to deposit the nucleus. With this, an amount of dissolved calcium carbonate in water is reduced, and it is possible to suppress the adhesion of the scale in the heat exchanger 304. In this invention, in order to further suppress the adhesion of the scale, a wall surface of the water passage of the heat exchanger 304 is coated with a fluorocarbon resin film (e.g., Patent Document 1).

Fig. 4 shows an example of an invention utilizing acid water. This example comprises a water-supply opening 401 which is to be connected to a water supply, a water supply-side pipe 402, acid water means 403 for acidifying water, an acid water-side pipe 404a through which the generated acid water flows, an alkali water-side pipe 404b through which alkali water flows when the water is acidified, a heat exchanger 405 for heating water, a tapping-side pipe 406, a tap hole 407 which is to be connected to the tapping means, and a bypass pipe 408.

The acid water means 403 has a plurality of opposed electrodes, and feeble current is allowed to flow. With this, the supplied water is acidified in the vicinity of an anode and is alkalified in the vicinity of a cathode. The acidified water and the alkalified water are separated from each other by means of a slit or the like, and the acid water is sent to the heat exchanger 405 through the acid water-side pipe 404a and is heated. The alkali water passes through the alkali water-side pipe 404b and is mixed with the heated acid water.

As described above, the calcium carbonate has characteristics that the calcium carbonate is excellently dissolved in the acid solution, the deposition and adhesion of the calcium carbonate can be suppressed in the heat exchanger 405 through which the acid water flows. In this invention also, in order to suppress the adhesion of the scale and to prevent the deterioration of endurance which is caused by contact with acid water, a wall surface of the water passage of the heat exchanger 405 is coated with a fluorocarbon resin film or the like (e.g., Patent Document 2).

### [Patent Document 1]

Japanese Patent Application Laid-open No.2001-317817

### [Patent Document 2]

Japanese Patent Application Laid-open No.2002-98414

In the above conventional inventions, however, since all water heated by the heat exchanger 304 (Fig. 3) and the heat exchanger 405 (Fig. 4) are processed, there is a problem that the amount of processing water of the nucleus generating means 303 (Fig. 3) and the acid water means 403 (Fig. 4) is great, and lifetime of a water processing section becomes short.

To solve the above problem, a scale removing operation of the heat exchange means or a regenerating operation of ion removing means is carried out using electrolytic water, thereby reducing the water processing amount. The present invention provides a water heater capable of preventing deterioration of performance caused by adhesion of scale, capable of preventing a trouble caused by clogging, and capable of increasing the lifetime of a water processing section.

To solve the conventional problems, the water heater of the present invention includes electrolytic water generating means, and salt deposited in a water pipe of the heat exchange means is removed using produced water of the electrolytic water generating means. With this, deterioration of performance of the water heater caused by adhesion of scale in the heat exchanger and a trouble caused by clogging are suppressed, and the lifetime of the electrolytic water generating means is increased.

To solve the conventional problems, the water heater of the present invention includes ion exchange means for removing at least basic positive ion, and electrolytic water generating means, basic icon which causes scale is removed by the ion exchange means, and the regenerating operation of the ion exchange means is carried out using the produced water of the electrolytic water generating means. With this, deterioration of performance of the water heater caused by adhesion of scale in the heat exchanger and a trouble caused by clogging are suppressed, and the lifetime of the electrolytic water generating means is increased.

### Brief Description of the Drawings

Fig. 1 is an explanatory view of a water heater according to an embodiment of the present invention.
Fig. 2 is an explanatory view of a water heater according to another embodiment of the invention.
Fig. 3 is an explanatory view of a conventional water heater.
Fig. 4 is an explanatory view of another conventional water heater.

### Preferred Embodiments of the Invention

Embodiments of the present invention will be explained below with reference to the drawings.

### (Embodiment 1)

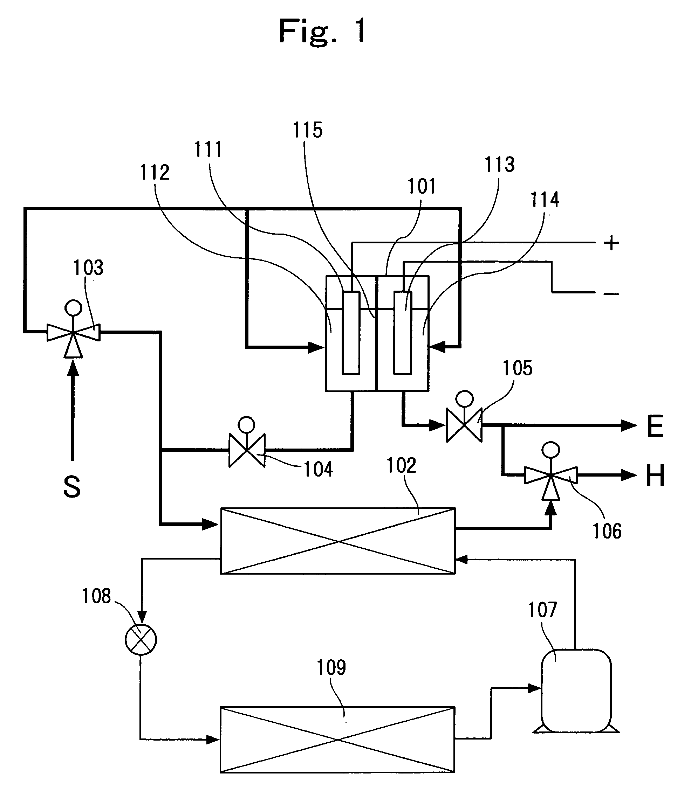

As shown in Fig. 1, an embodiment 1 of the invention comprises an electrolytic water unit 101, a hot water heat exchanger 102, a water-supply cross valve 103, an open/close valve 104, an open/close valve 105, a hot water-supply cross valve 106, a compressor 107 for constituting a vapor compression type heat pump cycle, an expansion valve 108, and an evaporator 109. The vapor compression type heat pump cycle constituted by the compressor 107, the expansion valve 108, the evaporator 109 and the hot water heat exchanger 102 corresponds to a heat source. The hot water heat exchanger 102 corresponds to heat exchange means which heats supplied water. The electrolytic water unit 101 corresponds to electrolytic water generating means.

In the electrolytic water unit 101, an anode 111 and a cathode 113 are separated from each other by means of a diaphragm 115. Acid water 112 is generated on the side of the anode 111 and alkali water 114 is generated on the side of the cathode 113.

At the time of normal hot water supplying operation, supplied water S from a water supply or a hot water storing tank is supplied from the water-supply cross valve 103 to the hot water heat exchanger 102. The hot water heat exchanger 102, the compressor 107, the expansion valve 108 and the evaporator 109 constitute the vapor compression type heat pump cycle, and heat is exchanged between refrigerant and the supplied water to obtain hot water in the hot water heat exchanger 102. The hot water is sent from the hot water-supply cross valve 106 to the hot water tap or the hot water storing tank as supplied hot water H. At the time of normal hot water supplying operation, the electrolytic water unit 101 is in a dormant state, the open/close valve 104 and the open/close valve 105 are closed, and electrolytic water is not supplied.

HCFC such as R22 is conventionally used as the refrigerant used in the vapor compression type heat pump cycle, but natural refrigerant such as CO₂ and HFC such as R410A which are practically used in recent years can also be used.

The CO₂ has merits that even if refrigerant is leaked into atmosphere, this does not affect the environment, and if the heat pump is operated using a supercritical region, hot water of high temperature (about 90°C) can be obtained efficiently.

However, as the temperature of the hot water becomes higher, the scale is more prone to be generated. Generally, the generation amount of scale is abruptly increased when the temperature of the hot water exceeds about 70°C. Therefore, the present invention is extremely effective even when a heat pump of CO₂ is used as the heat source or even when the hot water supplying operation is carried out with hot water of 70°C or higher.

If the hot water supplying operation is continued, scale such as calcium carbonate starts adhering to an inner wall of the water passage of the hot water heat exchanger 102. If the adhesion amount of scale is increased, the heat exchange efficiency is deteriorated, and clogging is caused at the worst. To avoid such a situation, when preset hot water supplying operation time is elapsed, a scale removing operation is carried out while the hot water supply is stopped.

At the time of the scale removing operation, the supplied water S is sent to the electrolytic water unit 101 from the water-supply cross valve 103, the acid water 112 is generated on the side of the anode 111 and the alkali water 114 is generated on the side of the cathode 113. The open/close valve 104 and the open/close valve 105 are opened, the acid water 112 is sent to the hot water heat exchanger 102 and the adhered calcium carbonate is removed. After that, the acid water 112 is allowed to flow through the hot water-supply cross valve 106 and is mixed to the sent acid water with each other and is discharged out as waste water E.

In the process for obtaining the acid water 112 which is necessary for the scale removing operation, alkali water 114 is generated as by-product, but if the alkali water 114 is directly discharged out, there is an adverse possibility that the pipe is damaged. Therefore, it is preferable that the alkali water 114 is mixed with the acid water 112 discharged out from the hot water heat exchanger 102 and neutralized or diluted and discharged out.

After the series of operations are carried out for a predetermined time, the scale removing operation is completed. After the scale removing operation is completed, if a predetermined or preset hot water supplying operation time is elapsed, the scale removing operation is again carried out.

The scale removing operation may be carried out when an amount of supplied hot water exceeds a preset value. If the hot water heat exchanger 102 is provided at its exit with a pH sensor, and if the scale removing operation is completed when the pH value becomes smaller than a predetermined value, the efficiency is more enhanced.

The scale such as calcium carbonate adhered to the inner wall of the water passage of the hot water heat exchanger 102 is removed in this manner, and a trouble caused by deterioration of the performance caused by adhesion of the scale or caused by clogging can be suppressed for the long term.

The electrolytic water unit 101 electrolyzes water only when the scale removing operation is carried out. Thus, the lifetime of the electrolytic water unit 101 is long as compared with a case in which the scale removing operation is always carried out. An amount of processing water per unit time can be determined in accordance with the scale removing operation and thus the size of the electrolytic water unit 101 can be suppressed to the minimum value. Since the time during which the hot water heat exchanger 102 is in contact with the acid water is short, the reliability of the hot water heat exchanger 102 can be secured for the long term.

The acid water used when the scale removing operation is carried out assumes weak acid when water of a normal water supply is used, and minus ion in the acid water is carbon ion or hypochlorous acid ion. Such ion is prone to become gas if the temperature increases, and in order to dissolve the calcium carbonate efficiently, the water temperature is preferably low. Therefore, it is preferable that the scale removing operation is carried out after the supply of hot water is completed and a certain time is elapsed and the temperature of the hot water heat exchanger 102 is lowered and at nighttime when the water temperature is low. More specifically, it is effective to carry out the scale removing operation at dead of night when hot water is not used, or before the hot water supplying operation is carried out if electricity contract in which a using time frame is limited.

The pH value of the acid water 112 can be lowered by adding slight salt into water which is to be electrolyzed by the electrolytic water unit 101, and the scale can be removed more efficiently. In this invention, even if salt is added, since the time during which the electrolytic water is generated is short, the stockpile of salt can be reduced or labor of the replenishing operation can be saved.

### (Embodiment 2)

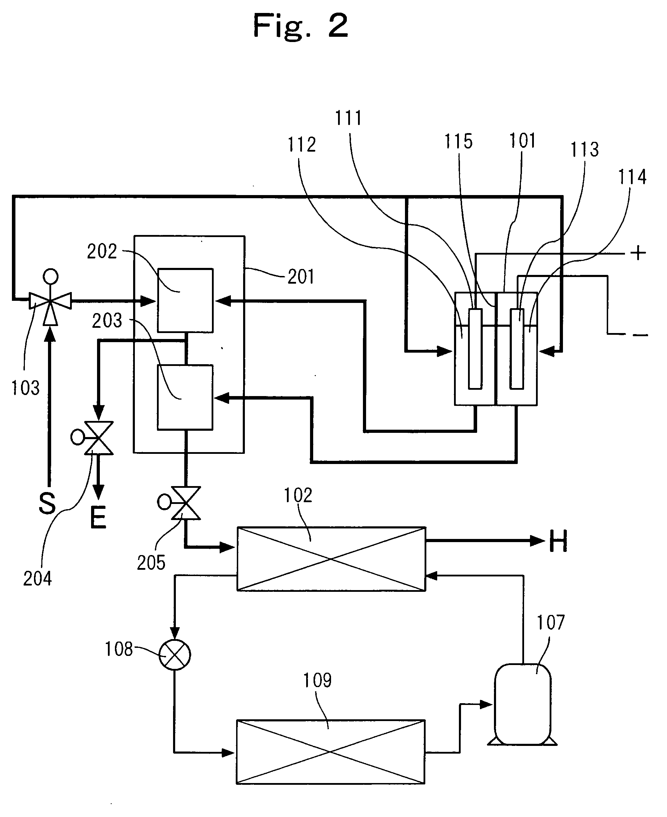

As shown in Fig. 2, an embodiment 2 of the present invention comprises the electrolytic water unit 101, the hot water heat exchanger 102, the water-supply cross valve 103, the compressor 107 constituting the vapor compression type heat pump cycle, the expansion valve 108, the evaporator 109, an ion exchange unit 201, an open/close valve 204 and an open/close valve 205. The vapor compression type heat pump cycle constituted by the compressor 107, the expansion valve 108, the evaporator 109 and the hot water heat exchanger 102 corresponds to the heat source. The hot water heat exchanger 102 corresponds to the heat exchange means which heats the supplied water. The ion exchange unit 201 corresponds to ion exchange means.

The ion exchange unit 201 includes a positive ion exchanger 202 corresponding to positive ion removing means and a negative ion exchanger 203 corresponding to negative ion removing means. Water can be discharged out from a connected portion between the positive ion exchanger 202 and the negative ion exchanger 203 at the time of the regenerating operation.

Positive ion exchange resin (acid resin) having carboxyl (-COOH weak acid) and sulfo group (-SO3H overacidity) in molecule is included in the positive ion exchanger 202. The positive ion exchange resin exchanges other positive ion in water solution with H, and discharges H⁺ into the water solution. The negative ion exchanger 203 is provided therein with negative ion exchange resin (basic resin). The negative ion exchange resin is obtained by changing synthetic resin having a large number of ammonium salt structures in one molecule into synthetic resin having structures of hydroxyl (-OH basic) in alkali water solution. The negative ion exchange resin exchanges other negative ion in water solution with OH and discharges OH-. Resin which exchanged positive ion isagain returned into the original positive ion exchange resin by acid, and if the resin which exchanged negative ion allows alkali solution to pass the rein, the resin is returned into its original negative ion exchange resin. Both the resins can be regenerated over and over again.

At the time of normal hot water supplying operation, in a state in which the open/close valve 204 is closed and the open/close valve 205 is opened, supplied water S from a water supply or a hot water storing tank is supplied from the water-supply cross valve 103 to the ion exchange unit 201. In the ion exchange unit 201, positive ion such as calcium ion is removed by the positive ion exchanger 202 and then, negative ion such as carbon ion is removed by the negative ion exchanger 203, and the water is supplied to the hot water heat exchanger 102.

The hot water heat exchanger 102, the compressor 107, the expansion valve 108 and the evaporator 109 constitute the vapor compression type heat pump cycle, and heat is exchanged between the refrigerant and the supplied water to obtain hot water in the hot water heat exchanger 102. The hot water is sent to the hot water tap or the hot water storing tank as supplied hot water H. At that time, since the hot water is supplied in a state in which ion causing the scale is removed, the scale is prevented from being generated in the hot water heat exchanger 102. At the time of anormal hot water supplying operation, the electrolytic water unit 101 is in the dormant state, and the electrolytic water is not supplied.

HCFC such as R22 is conventionally used as the refrigerant used in the vapor compression type heat pump cycle, but natural refrigerant such as CO₂ and HFC such as R410A which are practically used in recent years can also be used.

The CO₂ has merits that even if refrigerant is leaked into atmosphere, this does not affect the environment, and if the heat pump is operated using a supercritical region, hot water of high temperature (about 90°C) can be obtained efficiently.

However, as the temperature of the hot water becomes higher, the scale is more prone to be generated. Generally, the generation amount of scale is abruptly increased when the temperature of the hot water exceeds about 70°C. Therefore, the present invention is extremely effective even when a heat pump of CO₂ is used as the heat source or even when the hot water supplying operation is carried out with hot water of 70°C or higher.

If the hot water supplying operation is continued, the ion exchange unit 201 is brought into a saturated state, and ability of removing ion which causes the scale is deteriorated. To avoid this, when preset hot water supplying operation time is elapsed, a regenerating operation of the ion exchange unit 201 is carried out while the hot water supply is stopped.

At the time of the regenerating operation, the open/close valve 204 is opened, the open/close valve 205 is closed, and the supplied water S is sent to the electrolytic water unit 101 from the water-supply cross valve 103. The acid water 112 is generated on the side of the anode 111 and the alkali water 114 is generated on the side of the cathode 113. The acid water 112 is sent to the positive ion exchanger 202, the alkali water 114 is sent to the negative ion exchanger 203 and they are respectively regenerated. Water coming out from the positive ion exchanger 202 and water coming out from the negative ion exchanger 203 are mixed and discharged out as waste water E through the open/close valve 204.

At the time of the regenerating operation, each of water coming out from the positive ion exchanger 202 and water coming out from the negative ion exchanger 203 assumes acid or alkali. Therefore, it is preferable that they are mixed and discharged out instead of directly discharged into the water pipe.

After the series of operations are carried out for a predetermined time, the regenerating operation is completed. After the regenerating operation is completed, if a predetermined or preset hot water supplying operation time is elapsed, the regenerating operation is again carried out.

The regenerating operation may be carried out when an amount of supplied hot water exceeds a preset value. If the positive ion exchanger 202 is provided at its exit with a pH sensor, and if the regenerating operation is completed when the pH value becomes smaller than a predetermined value, the efficiency is more enhanced.

The ion such as calcium carbonate which causes the scale is removed and water is supplied in this manner. Therefore, it is possible to prevent the scale from being deposited on the hot water heat exchanger 102, and a trouble caused by deterioration of the performance caused by adhesion of the scale or caused by clogging can be suppressed.

The electrolytic water unit 101 electrolyzes water only when the regenerating operation is carried out. Thus, the lifetime of the electrolytic water unit 101 is long as compared with a case in which the regenerating operation is always carried out. An amount of processing water per unit time can be determined in accordance with the regenerating operation and thus the size of the electrolytic water unit 101 can be suppressed to the minimum value.

The pH value of the acid water 112 can be lowered and the pH value of the alkali water 114 is increased by adding slight salt into water which is to be electrolyzed by the electrolytic water unit 101. Therefore, the regeneration of the ion exchange unit 201 can be carried out more efficiently.

According to the water heater of the present invention, as described above, the removing operation of scale adhered to the heat exchanger or the regenerating operation of the ion exchange unit which removes ion which causes the scale is carried out with predetermined timing using the electrolytic water generated by the electrolytic water unit. Therefore, deterioration of the hot water supply ability and a trouble such as clogging can be prevented and the lifetime of the electrolytic water unit can be increased by reducing the amount of processing water of the electrolytic water unit.

## Claims

1. A water heater comprising a heat source, heat exchange means for heating supplied water, and electrolytic water generating means, wherein a removing operation of scale having salt as main ingredient deposited in a water pipe of said heat exchange means is carried out using produced water of said electrolytic water generating means.

2. The water heater according to claim 1, wherein acid water which is one of the produced water of said heat exchange means is used in deposited salt removing processing for removing salt deposited in the water pipe of said heat exchange means, the water used in this processing is mixed with alkali water which is the other water of the produced water and discharged out.

3. A water heater comprising a heat source, ion exchange means for removing at least basic positive ion in supplied water, heat exchange means for heating water after the basic positive ion is removed, and electrolytic water generating means, wherein a regenerating operation of said ion exchange means is carried out using produced water of said electrolytic water generating means.

4. The water heater according to claim 3, wherein said ion exchange means includes positive ion removing means for removing positive ion and negative ion removing means for removing negative ion, acid water produced by said electrolytic water generating means is used for regenerating processing of said positive ion removing means, alkali water produced by said electrolytic water generating means is used for regenerating processing of said negative ion removing means, both the former water and later water are mixed and discharged.

5. The water heater according to claim 1 or 3, wherein hot water supply time is totalized, and after the totalized hot water supply time reaches a predetermined value, the produced water of said electrolytic water generating means is used.

6. The water heater according to claim 1, wherein before the hot water supplying operation is carried out or when the temperature of said heat exchange means is low, salt deposited in a water pipe of said heat exchange means is removed.

7. The water heater according to any one of claims 1 to 4, wherein the supplied water is heated to 70°C or higher.

8. The water heater according to any one of claims 1 to 4, wherein said heat source is a vapor compression type heat pump.

9. The water heater according to claim 8, wherein carbon dioxide is used as a refrigerant of said vapor compression type heat pump.
